Europäisches Patentamt

European Patent Office

Office européen des brevets

(11) Veröffentlichungsnummer: **0 191 393 B1**

(12) **EUROPÄISCHE PATENTSCHRIFT**

(45) Veröffentlichungstag der Patentschrift: **16.05.90**

(51) Int. Cl.⁵: **B 23 K 11/24**

(21) Anmeldenummer: **86101374.6**

(22) Anmeldetag: **03.02.86**

(54) Steuerschaltung für den Strom eines Schweisstransformators.

(30) Priorität: **07.02.85 DE 3504159**

(43) Veröffentlichungstag der Anmeldung:
**20.08.86 Patentblatt 86/34**

(45) Bekanntmachung des Hinweises auf die
Patenterteilung:
**16.05.90 Patentblatt 90/20**

(84) Benannte Vertragsstaaten:
**AT FR GB IT SE**

(56) Entgegenhaltungen:
**EP-A-0 080 514**
**DE-A-3 047 913**

(73) Patentinhaber: **ACCUMULATORENFABRIK
SONNENSCHEIN GMBH
Thiergarten Postfach 1180
D-6470 Büdingen 1 Oberhessen (DE)**

(72) Erfinder: **Ladeburg, Jörg
Herrnhaag
D-6470 Büdingen (DE)**
Erfinder: **Becker, Robert, Dipl.-Ing.
Am Mühltor 8
D-6470 Büdingen (DE)**
Erfinder: **Dreymann, Bernhard
Am Molkenborn 21
D-6470 Büdingen (DE)**
Erfinder: **Gensler, Thomas, Dipl.-Ing.
Pferdsbacher Weg 27a
D-6470 Büdingen (DE)**
Erfinder: **Ulrich, Robert
Bahnhofstrasse 46
D-6475 Glauburg (DE)**
Erfinder: **Wahrenbruch, Paul
Sportfeld 4
D-6473 Gedern (DE)**
Erfinder: **Blaser, Reinhard, Dr. Dipl.-Ing.
Herrngasse 26
D-6470 Büdingen (DE)**

Courier Press, Leamington Spa, England.

# EP  0 191 393  B1

(74) Vertreter: **Baumann, Eduard, Dipl.-Phys.**
**Postfach 1201 Sattlerstrasse 1**
**D-8011 Höhenkirchen/München (DE)**

**Beschreibung**

Die Erfindung bezieht sich auf eine Steuerschaltung gemäß dem Oberbegriff des Anspruches 1.

Derartige Steuerschaltungen dienen der Schweißzangen-Kontaktierungsüberwachung, um erst dann den hohen Schweißstrom einzuschalten, wenn ein korrekter Kontakt zwischen Schweißzange und zu verschweißenden Teilen besteht. Folgende bisherige Verfahren werden angewandt:

1. Eine mechanische Positionsüberwachung und Positionserkennung der Schweißzange. Wegen der großen Maßtoleranzen des Werkstückes läßt sich hierdurch keine eindeutige Aussage über die Kontaktierung treffen.

2. Der durch die Schweißzange auf das Werkstück ausgeübte hydraulische Druck im Hubzylinder, der die Schweißzange betätigt, wird zur Feststellung der Kontaktierung und Schaltung des Schweißstromes verwendet. Dies erfordert jedoch einen sehre genau konstanten Druck der antreibenden Pressluft, und überhaupt den Antrieb über Pressluft. Dies schränkt den Anwendungsbereich ein.

3. Über den Schweißtrafo wird eine Wechselspannung (50 Hz) an die Zangen gelegt, so daß bei Kontaktierung der Zange ein Sekundärstrom entsteht, der nur einen Bruchteil des Schweißstromes beträgt. Eine derartige Anordnung erfordert jedoch einen Eingriff in die Stromsteuerung. Die geringe Frequenz bedingt darüberhinaus eine langsame Auswertung und Schaltfähigkeit.

4. Aus EP—A—0080514 ist eine Steuerschaltung gemäß dem Oberbegriff des Anspruches 1 bekannt. Diese ist ziemlich aufwendig geschaltet und dient im wesentlichen der Steuerung eines gesamten Schweißablaufes. Hierzu ist eine HF-Niederstromquelle zur Messung der an den Elektroden anliegenden Spannung vorgesehen. Weiterhin wird der zeitliche Verlauf dieser Spannung sowie des Spitzenwertes gemessen, gespeichert, mit entsprechenden Bezugskurven verglichen und für die Steuerung des Primär- Schweißstromes eingesetzt.

Der Erfindung liegt die Aufgabe zugrunde, eine Steuerschaltung gemäß dem Oberbegriff des Anspruches 1 so auszubilden, daß eine einfache, genaue und zuverlässige Feststellung der Kontaktierung ermöglicht wird, die unabhängig von Maßtoleranzen des Werkstückes und vom Antriebsdruck des Betätigungsmechanismus für die Schweißelektroden ist, und wobei die Schweißstromsteuerung nicht beeinflußt wird.

Die Aufgabe wird erfindungsgemäß durch die Merkmale des Kennzeichens des Anspruches 1 gelöst. Weitere Ausgestaltungen der Erfindung sind in den Unteransprüchen unter Schutz gestellt.

Ein Ausführungsbeispiel der Erfindung ist in der Zeichnung dargestellt. Es zeigt:

Figur 1 in schematischer Darstellung den Aufbau einer Schaltung,

Figur 2 die Stromlaufbahn einer Detailschaltung,

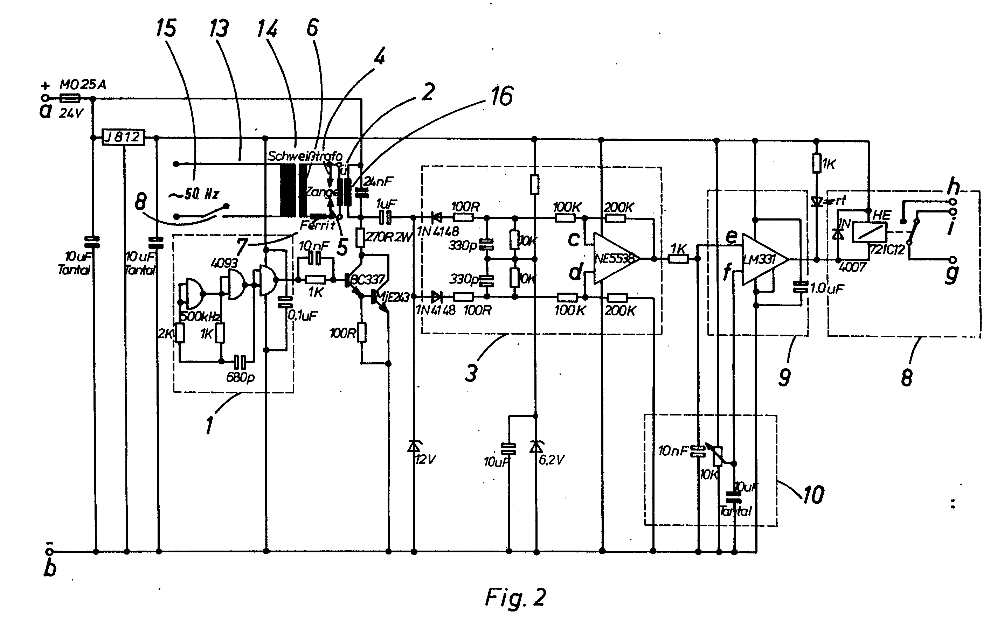

Tabelle 1 die Stückliste der in der Schaltung von Figur 2 verwendeten elektronischen Bauteile.

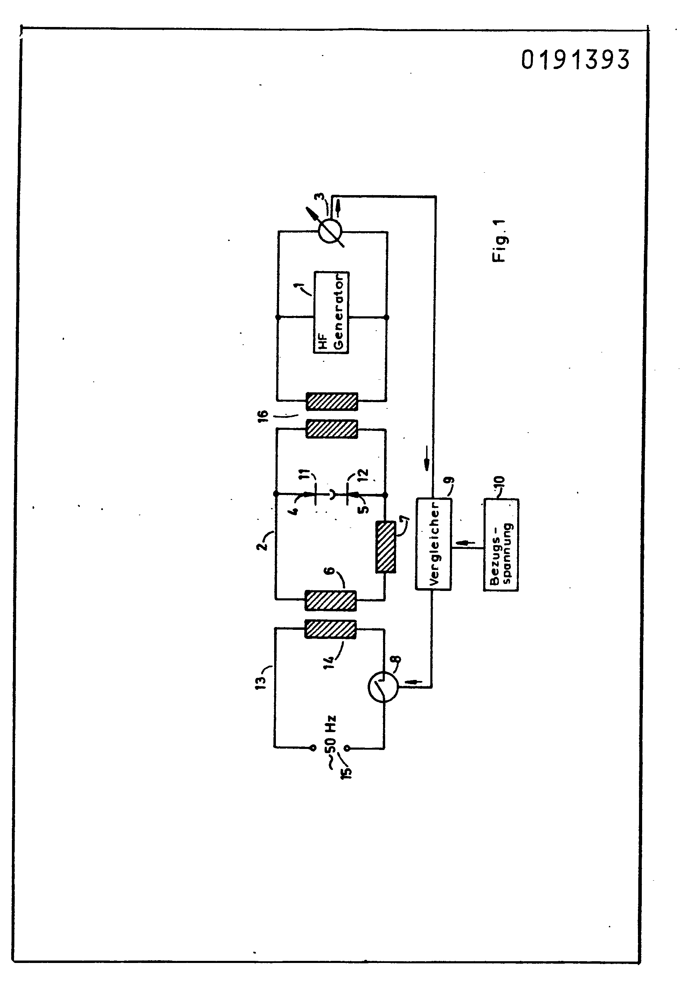

In Figur 1 ist an der linken Seite eine 50-Hertz-Stromversorgung 15 dargestellt, die zusammen mit einer Primärwicklung 14 den Primärkreis 13 des Schweißtransformators 14, 6, bildet, wobei die Sekundärwicklung 6 des Schweißtransformators Teil eines Sekundärkreises 2 ist. In Serie zum Primärkreis 13 ist eine Unterbrecherschaltung in Form eines Ventiles 8 geschaltet, das den durch die Primärwicklung 14 fließenden Strom und damit den Schweißstrom steuert.

Über die Sekundärwicklung 6 fließt der Schweißstrom innerhalb des Sekundärkreises 2 über eine HF-Drossel 7 und die Sekundärwicklung eines HF-Übertragers 16. Parallel zu dieser Schweißstromschleife 2 sind die Schweißzangen 4 und 5 gelegt, die je ein Werkstück 11 bzw. 12 der miteinander zu verschweißenden Werkstücke kontaktieren. Die vom HF-Überträger 16 induzierte hochfrequente Wechselspannung treibt über die Schweißzangen 4 und 5 einen Strom durch die Werkstücke 11 und 12, wenn dieser Stromkreis geschlossen ist. Die HF-Drossel 7 verhindert dabei das Fließen eines HF-Stromes durch die Sekundärwicklung 6 des Schweißtransformators 14, 6.

Die Primärwicklung des HF-Überträgers 16 ist seriell mit einer Meßschaltung 3 verbunden, wobei ein HF-Generator 1, beispielsweise ein HF-Oszillator, parallel zu dieser aus Primärwicklung des HF-Übertragers 16 und Meßschaltung 3 sich ergebenden HF-Stromschleife liegt.

Die Meßschaltung 3 erfasst den HF-Spannungsabfall am HF-Überträger 16 und somit an den Schweißzangen 4, 5, und setzt diesen Spannungsabfall in eine proportionale Gleichspannung um. Diese Gleichspannung wird einem Vergleicher 9 zugeführt, der diese Spannung mit einer voreinstellbaren, von einer Bezugsspannungsquelle 10 gelieferten Bezugsspannung vergleicht. Unterschreitet die von der Meßschaltung 3 gelieferte Gleichspannung diesen voreingestellten Wert, so schaltet das vom Komparator gelieferte Differenzsignal das Ventil 8 und schließt den Primärkreis 13, so daß Schweißstrom fließen kann.

In Figur 2 sind schaltungstechnische Einzelheiten zur Realisierung der in Figur 1 gezeigten Grundschaltung dargestellt.

Auch hier ist die 50-Hertz-Stromversorgung 15 zu erkennen, die mit dem Primärkreis 13 des Schweißtransformators 14, 6, Verbunden ist, wobei in Serie hierzu das Ventil 8 geschaltet ist. Die Sekundärwicklung 6 des Schweißtransformators ist Bestandteil des Sekundärkreises 2, der zusammen mit der Sekundärwicklung des HF-Übertragers 16 den Sekundärkreis 2 bildet. In diesen Sekundärkreis 2 ist eine HF-Impedanz 7 in Form eines Ferritkernes eingeschaltet, parallel hierzu sind die beiden Schweißzangen 4 und 5 zu erkennen, von denen jeweils eine mit einem der beiden zu verschweißenden Teile in Kontakt steht. Weiterhin ist der HF-Generator 1 zu erkennen, wobei hinsichtlich der Bedeutung und Dimensionierung der einzelnen Schaltungssymbole auf die beiliegende Tabelle 1 verwiesen wird. Wesentliche Bauteile sind eine Transistorschaltung und ein Dreifach-Nand-Glied. Desgleichen sind an bestimmten geeigneten Stellen Widerstände und Kondensatoren vorgesehen. Es sei erwähnt, daß der Einfachheit halber einige Kapazitätzwerte lediglich mit p bezeichnet sind, wobei es genauer pF heißen müsste.

Auch der detaillierte Aufbau der Meßschaltung 3 ist in Figur 2 zu erkennen. Wesentliches Kernstück ist ein Operationsverstärker mit zwei Eingangskontakten c und d, die über an geeigneter Stelle angeordnete Widerstände, Kondensatoren und insbesondere zwei an jedem der beiden Eingänge des Operationsverstärkers liegende Gleichrichterdioden an den Übertrager 16 und gleichzeitig an den HF-Generator 1 angeschlossen sind.

Der Ausgang der Meßschaltung 3 ist an den Vergleicher 9 angeschlossen, dessen Kernstück wiederum ein Operationsverstärker mit zwei Eingängen e und f ist. Beide Eingänge sind auch mit einer Bezugsspannungsquelle 10 verbunden.

Der Ausgang des Vergleichers 9 ist mit der Unterbrecherschaltung 8 verbunden, deren wesentliches Kernstück ein spezieller Hamlin-Reedrelais ist. Die Buchstaben g, i und h bezeichnen hier bestimmte elektrische Kontaktstellen.

Der Kontakt a der Schaltung gemäß Figur 2 stellt die Verbindung desjenigen Kreises des Übertragers 16, der mit der Meßschaltung 3 in Verbindung steht, mit dem Pluspol einer 24 Volt-Gleichstromquelle dar, und zwar über eine Sicherung M mit 0,25 A, während der andere Kontakt des genannten Kreises über einen Kondensateor 1 µF und eine Zenerdiode 12 V mit dem Minuspol b der genannten Gleichstromquelle verbunden ist. Vorzugsweise handelt es sich hierbei um die üblicherweise bereits am Kopf eines Industrieroboters vorhandene Gleich-Stromquelle mit der üblicherweise unterschiedliche Baugruppen versorgt werden. Die Schaltung ist somit so aufgebaut, daß sie an den Anschluß einer derartigen bereits vorhandenen 24 Volt-Gleichstromquelle angepaßt ist und außer der 50 Hz-Netzversorgung keine zusätzlichen Spannungsquelle benötigt. Diese Gleichspannung wird beispielsweise über die Sicherung M 0,25 A an den Eingangskondensator 10 µF der Regelschaltung gelegt. Die Logik und Signalverarbeitung wird über einen Festspannungsregler J 812 mit nachfolgendem Glättungskondensator von 10 µF mit 12 Volt Gleichspannung versorgt. Lediglich der HF-Strom wird direkt aus dem Eingangskondensator von 10 µF entnommen, um Rückkopplungen auf die Signalverarbeitung zu vermeiden.

Auch die CMOS-Gatter und der Komparator 9 werden mit 0,1 µF geblockt.

Der HF-Generator 1 enthält gemäß dem in Figur 2 dargestellten Ausführungsbeispiel zwei CMOS-NAND-Gatter 4093, die zusammen mit der RC-Kombination von 1 kΩ, 2 kΩ, 680 pF, einen 500 kHz-Rechteckgenerator ergeben. Ein drittes NAND-Gatter treibt über das strombegrenzende und flankenbildende RC-Glied von 10 kΩ und 10 nF die Darlington-Schaltung mit den Bauteilen BC 337, MJI 243 und 100 Ω. Der Widerstand von 270 Ω und 2 W dient zur Strombegrenzung, der Kondensator von 24 nF zur Flankenverbesserung. Der Übertrager 7 stellt für die Hochfrequenz eine hohe Impedanz oder im Falle kontaktierter Schweißzangen einen Kurzschluß dar.

Im Folgenden wird die Funktion der Meßschaltung 3 gemäß Figur 2 näher beschrieben. Über einen Koppelkondensator mit 1 µF wird die HF-Spannung auf eine Zweiweg-Gleichrichterspannung mit Glättung gegeben, was durch die Bauteile 1 N 4148, 100 Ω, 330 pF, 10 kΩ bewirkt wird, und in seiner Amplitude begrenzt, und zwar über das Bauteil ZD, 12 V. Der Mittelpunkt der Zweiweg-Gleichrichtung ist auf 6,2 V festgelegt, siehe Bauteile ZD 6 V, 2,10 µF. Am Glättungskondensator von 330 pF ergibt sich somit eine amplitudenabhängige Differenz-Gleichspannung. Diese Gleichspannung wird durch den Operationsverstärker NE 5538 um den Faktor 2 verstärkt und geglättet, siehe hierzu Bauteile 200 kΩ/100 kΩ bzw. 1 kΩ, 10 nF.

In Figur 2 besteht der Komparator 9 im wesentlichen aus dem Bauteil LM 331. Diese Bauteil vergleicht die Gleichspannung mit der eingestellten Referenzspannung, siehe Bauteile 10 kΩ, 10 µF. Beim Unterscheiden der Schaltschwelle wird der Komparatorausgang "low" oder niedrig, das Relais HE 721 C 12 zieht an und die Anzeige LED, 1 kΩ leuchtet auf. Die Diode 1 N4007 schützt den Komparator vor induzierten negativen Spannungen. Der Relaisausgang steht als potentialfreier Wechsler für nach folgende Steuerungsaufgaben zur Verfügung.

Tab. 1 listet die beim Ausführungsbeispiel gemäß Fig. 2 verwendeten Bauteile auf. Hierbei sind der Übersicht halber alle Widerstände mit R bezeichnet, daß Potentiometer mit P, die Kondensatoren mit C, die Dioden mit D, die Leuchtdiode mit LED, die Transistoren mit T, die Regler mit IC, das Relais mit K, die Sicherung mit F, die Übertragung mit Ü. Sämtliche Bauteile einer Art sind fortlaufend nummeriert. In Figur 2 selbst sind der Übersicht halber lediglich die Werte bzw. Typenbezeichnungen dieser Bauteile angegeben.

## TABELLE 1
### Schweißzangen-Kontaktierungs-Überwachung
### Stuckliste

| | | | |
|---|---|---|---|
| R1 | Metallschicht-Widerstand | 2k | 0,25W |
| R2 | Metallschicht-Widerstand | 1K | 0,25W |
| R3 | Metallschicht-Widerstand | 1k | 0,25W |
| R4 | Metallschicht-Widerstand | 100R | 0,25W |
| R5 | Draht-Widerstand | 270R | 2W |
| R6 | Metallschicht-Widerstand | 100R | 0,25W |
| R7 | Metallschicht-Widerstand | 100R | 0,25W |
| R8 | Metallschicht-Widerstand | 10k | 0,25W |
| R9 | Metallschicht-Widerstand | 10k | 0,25W |
| R10 | Metallschicht-Widerstand | 1k | 0,25W |
| R11 | Metallschicht-Widerstand | 100k | 0,25W |
| R12 | Metallschicht-Widerstand | 200k | 0,25W |
| R13 | Metallschicht-Widerstand | 100k | 0,25W |
| R14 | Metallschicht-Widerstand | 200k | 0,25W |
| R15 | Metallschicht-Widerstand | 1k | 0,25W |
| R16 | Metallschicht-Widerstand | 1k | 0,25W |
| | | | |
| P1 | Spindelpotentiometer | 10k | 0,75W |

| | | | |
|---|---|---|---|
| C1 | Tantal-Elko | 10µF | 35V |
| C2 | Tantal-Elko | 10µF | 35V |
| C3 | Keramik Kond. | 680pF | 50V |
| C4 | Keramik Kond. | 100nF | 50V |
| C5 | Keramik Kond. | 10nF | 50V |
| C6 | Keramik Kond. | 1µF | 50V |
| C7 | Keramik Kond. | 330pF | 50V |
| C8 | Keramik Kond. | 330pF | 50V |
| C9 | Tantal Elko | 10µF | 35V |
| C10 | Keramik-Kond. | 10nF | 50V |
| C11 | Tantal-Elko | 10µF | 35V |
| C12 | Keramik-Kond. | 100nF | 50V |
| C13 | Keramik-Kond. | 6,8nF | 50V |
| D1 | Zenerdiode | ZD 12V | 0,25W |
| D2 | Diode | 1N4148 | |
| D3 | Diode | 1N4148 | |
| D4 | Zenerdiode | ZD 6,2V | 0,25W |
| D5 | Diode | 1N4007 | |
| LED | Leuchtdiode rot | | |

| | | |
|---|---|---|
| T1 | Transistor | BC 337 |
| T2 | Transistor | MJE 243 |
| | | |
| IC1 | Spannungs-Regler | MC 7812 |
| IC2 | 4-fach Nand | MC 14093 |
| IC3 | OP-Verst. | NE 5538 |
| IC4 | Komparator | LM 311 |
| | | |
| K1 | Reedrelais | HAMLIN HE721C12 |
| | | |
| F1 | Sicherung | M0,25A |

Ferrit 2×U37/15-3C8

Ü Übertrager RM6-Schalenkernsatz/N250
  N1=N2=35, φ=0,3mm

## Patentansprüche

1. Steuerschaltung für den Strom (50 Hz.) eines Schweißtransformators mit zwei Schweißelektroden (4, 5), deren erste (4) an einem ersten (11) der miteinander zu verschweißenden Teile (11, 12) angeklemmt ist, und deren zweite (5) das zweite Teil (12) kontaktiert, sowie mit einer Stromversorgung (15) für den Schweißtransformator (14, 6), beinhaltend

a. einen HF- Generator (1) zur Versorgung des Sekundärkreises (2) des Schweißtransformators mit Meßstrom,

b. eine Messeinrichtung (3) für den Widerstand zwischen den beiden Schweißelektroden (4, 5)

c. eine Steuerung (8) für den Schweißstrom,

d. einen Vergleicher (9), der den Spannungsabfall an den Schweißelektroden (4, 5) mit einem, von einer Bezugsspannungsquelle (10) gelieferten, voreingestellten Schwellwert vergleicht und ein entsprechendes Steuersignal an die Steuerung (8) liefert, gekennzeichnet durch

e. eine derartige Zusatzimpedanz innerhalb des Sekundärkreises (2) des Schweißtransformators und in Serie zu dessen Sekundärwicklung (6), daß die Impedanz lediglich für Hochfrequenz (500 kHz) deutlich erhöht wird, während sie für den Schweißstrom im wesentichen gleich bleibt, und daß ein Fließen von HF- Meßstrom durch die Sekundärwicklung (6) des Schweißtransformators (14, 6) verhindert wird,

f. eine Steuerung für den Schweißstrom in Form einer Unterbrecher- oder Auslöseschaltung (8), die erst bei Empfang eines Steuersignales des Vergleichers (9), das der vollen Kontaktierung der beiden Schweißelektroden (4, 5) oder -zangen mit den beiden zu verschweißenden Teilen (11, 12) entspricht, automatisch den Primärschweißkreis (13) des Schweißtransformators schließt.

g. eine einfache Widerstandsmessung, wobei die Meßeinrichtung (3) nur die Spannungsamplitude an den Schweißelektroden mißt.

2. Schaltung nach Anspruch 1, dadurch gekennzeichnet, daß die Zusatzimpedanz (7) ein als HF- Drossel wirkender Ferritkern isdt, der um die Sekundärleitung (2) gelegt ist.

3. Schaltung nach Anspruch 1 oder 2, dadurch gekennzeichnet, daß als Stromversorgung für die Schaltung eine Gleichspannungsquelle (24 V) verwendet wird, die über einen Festspannungsregler eine 12 Volt-Spannung liefern kann.

4. Schaltung nach einem der Ansprüche 1 bis 3, dadurch gekennzeichnet, daß der HF- Generator (1) parallel zu einer HF- Stromschleife, gebildet aus der Meßschaltung (3) und der Primärwicklung eines Übertragers (16), geschaltet ist, dessen Sekundärwirklung Teil des Sekundärkreises (2) des Schweißtransformators in Form einer Schweißtransformatorschleife (2; 6; 7) ist, zu der die beiden, miteinander zu kontaktierenden Schweißeleketroden bzw. Schweißzangen (4, 5) parallel geschaltet sind, wobei der HF- oder Hochfrequenz- Generator (500 kHz) einen Schalttransistor (Darlington) (mit 500 kHz) derart ansteuert, daß über einen Lastwiderstand und einen Übertrager (16) eine Rechteckspannung (von 24 V) an die Schweißzangen (4, 5) gelegt wird.

5. Schaltung nach einem der Ansprüche 1 bis 4, dadurch gekennzeichnet, daß zur Auswertung der Amplitude der HF- Spannung diese über einen Kondensator auf eine Spannungsverdoppler- Schaltung mit Glättung gegeben wird, deren Mittelpunkt vorzugsweise auf 6,2 Volt festgelegt ist, daß die erhaltene Amplitudendifferenz, vorzugsweise nach einer weiteren Verstärkung, geglättet und vom Vergleicher (9) mit dem von der Bezugsspannungsquelle (10) gelieferten, voreingestellten Schwellwert verglichen wird, und daß der Vergleicher (9) bei Unter- /Überschreiten eines bestimmten vorgegebenen Differenzsignales ein Auslösesignal an die Unterbrecherschaltung (8) zur Freigabe des Schweißstromes liefert.

6. Schaltung nach einem der Ansprüche 1 bis 5, dadurch gekennzeichnet, daß der Vergleicher (9) einen LED- Indikator und ein Relais betreibt.

7. Schaltung nach einem der Ansprüche 1 bis 5, dadurch gekennzeichnet, daß der Vergleicher (9) einen LED- Indikator, einen Optokoppler oder einen Transistor (open collector) treibt.

8. Verwendung der Schaltung nach einem oder mehreren der Ansprüche 1 bis 7 in einem Industrie- Schweißroboter zum Verschweißen der Polbrücken von Bleiakkumulatoren, vorzugsweise zwischen den Zellen, wobei als Stromversorgung für die Schaltung die am Kopf des Schweißroboters bereits vorhandene Gleichspannungsquelle eingesetzt wird.

**Revendications**

1. Circuit de commande pour le courant (50 Hz) d'un transformateur de soudage composé de deux électrodes de soudage (4, 5) dont la première (4) est serrée sur la première (11) de deux pièces à souder l'une à l'autre (11, 12), et dont la deuxième (5) est en contact avec la deuxième pièce (12), ainsi que d'une alimentation en courant (15) pour le transformateur de soudage (14, 6), comprenant

a) un générateur H.F. (1) pour l'alimentation en courant de mesure du circuit secondaire (2) du transformateur de soudage,

b) un dispositif de mesure (3) pour la résistance entre les deux électrodes de soudage (4, 5),

c) une commande (8) pour le courant de soudage,

d) un comparateur (9) qui compare la chute de tension sur les électrodes de soudage (4, 5) avec une valeur préréglée fournie par une source de tension de référence (10) et envoie un signal de commande correspondant à l'unite de commande (8), caractérisé par

e) une impédance supplémentaire à l'intérieur du circuit secondaire (2) du transformateur de soudage montée en série sur le bobinage secondaire (6) de ce dernier, telle que l'impédance ne soit nettement augmentée que pour la haute fréquence (500 kHz) tout en restant sensiblement égale pour le courant de soudage, et telle que le passage du courant de mesure H.F. à travers le bobinage secondaire (6) du transformateur de soudage (14, 6) soit empêché,

f) une commande pour le courant de soudage sous forme d'un circuit interrupteur ou déclencher (8) qui ne ferme automatiquement le circuit de soudage primaire (13) du transformateur de soudage que lorsque elle a reçu le signal du comparateur (9) correspondant à l'établissement du plein contact entre les deux électrodes de soudage ou porte-baguettes (4, 5) avec les deux pièces à souder (11, 12),

g) un dispositif simple de mesure de la résistance (3) ne mesurant que l'amplitude de la tension sur les électrodes de soudage.

2. Circuit de commande selon la revendication 1, caractérisé en ce que l'impédance supplémentaire (7) est un core de ferrite agissant à la manière d'une bobine d'arrêt et disposé autour du circuit secondaire (2).

3. Circuit de commande selon la revendication 1 ou 2, caractérisé en ce que l'alimentation du circuit est assurée par une source de courant continu (24 V) pouvant fournir une tension de 12 V par l'intermédiaire d'un régleur de tension.

4. Circuit de commande selon l'une des revendications 1 à 3, caractérisé en ce que le générateur H.F. (1) est montée en parallèle à une boucle de courant H.F. se composant du circuit de mesure (3) et de la bobine primaire d'un transformateur (16), et dont le bobinage secondaire fait partie du circuit secondaire (2) du transformateur de soudage sous forme d'une boucle de transformateur de soudage (2; 6; 7), sur laquelle sont montées en parallèle les deux éléctrodes ou porte-baguettes (4, 5) à mettre en contact l'une avec l'autre, le générateur H.F. ou haute fréquence (500 kHz) excitant un transistor de commande (Darlington, 500 kHz) de telle sorte à appliquer un tension en rectangle (de 24 V) sur les portes-baguettes (4, 5) par l'intermédiaire d'une résistance de charge et d'un transformateur (16).

5. Circuit de commande selon l'une des revendications 1 à 4, caractérisé en ce que, en vue de l'analyse de l'amplitude de la tension H.F., celle-ci est transmise par l'intermédiaire d'un condensateur à une circuit de doublage de la tension avec lissage dont la valeur centrale est fixée de préférence à 6,2 Volt, que la différence d'amplitude ainsi obtenue, de préférence après avoir été amplifiée encore une fois, est lissée, puis comparée par le comparateur (9) avec la valeur-seuil fournie par la source de tension de référence (10), et que, en cas d'écart par rapport à un signal différentiel prédéfini, le comparateur (9) envoie un signal de déclenchement au circuit interrupteur (8) pour libérer le courant de soudage.

6. Circuit de commande selon l'une des revendications 1 à 5, caractérisé en ce que le comparateur (9) actionne un témoin LED et un relais.

7. Circuit de commande selon l'une des revendications 1 à 5, caractérisé en ce que le comparateur (9) actionne un témoin LED, un coupleur optique ou un transistor (open collector).

8. Utilisation d'un circuit de commande selon l'une ou plusieurs des revendications 1 à 7 dans un robot de soudage industriel en vue du soudage des ponts entre les pôles d'accumulateurs à plomb, de préférence entre les cellules, en exploitant comme source d'alimentation en tension du circuit la courant.

## Claims

1. Control circuit for the current (50 Hz) of a welding transformer including two welding electrodes (4, 5), the first one (4) of said electrodes being in contact with a first one (11) of the pieces to be welded and the second electrode (5) being in contact with the second one (12) of said pieces, and including a power supply (15) for the welding transformer (14, 6), comprising

a. a HF generator (1) for providing measuring current to the secondary circuit (2) of the welding transformer,

b. measuring means (3) for measuring the resistance between said two welding electrodes (4, 5),

c. control means (8) for the welding current,

d. a comparator (9) for comparing the voltage drop at the welding electrodes (4, 5) with a preset threshold level provided by a reference voltage source (10) and for supplying a corresponding control signal to said control means (8), characterized by

e. such an additional impedance within the secondary circuit (2) of the welding transformer and coupled in series to the secondary winding (6) thereof that the impedance is significantly increased only for high frequency (500 kHz) whereas it remains essentially constant for the welding current, and that a flow of measuring HF current through the secondary winding (6) of the welding transformer (14, 6) is blocked,

f. control means for the welding current in the form of an interrupter or trigger circuit (8) which automatically closes the primary welding circuit (13) of the welding transformer only in response to a control signal from the comparator (9) which corresponds to complete contacting of the two welding electrodes (4, 5) or tongs and the two pieces (11, 12) to be welded,

g. simple resistance measuring means, wherein the measuring means (3) only measures the voltage amplitude at the welding electrodes.

2. Circuit as claimed in claim 1, characterized in that the additional impedance (7) is a ferrite core which acts as a HF reactor and is disposed about the secondary circuit (2).

3. Circuit as claimed in claim 1 or claim 2, characterized in that the power supply for the circuit is a d.c. voltage source (24 V) adapted to supply a voltage of 12 V through a fixed-voltage regulator.

4. Circuit as claimed in any one of the claims 1 to 3, characterized in that the HF generator (1) is coupled in parallel to a HF current loop constituted by the measuring circuit (3) and the primary winding of a transformer (16) the secondary winding of which is part of the secondary circuit (2) of the welding transformer in the form of a welding transformer loop (2; 6; 7) to which the two welding electrodes or tongs (4, 5), which are to be contacted, are coupled in parallel, wherein the HF generator (500 kHz) drives a switching transistor (Darlington) (of 500 kHz) such that a square-wave voltage (of 24 V) is applied via a load resistor and a transformer (16) to the welding tongs (4, 5).

5. Circuit as claimed in any one of the claims 1 to 4, characterized in that for evaluating the amplitude of the HF voltage the latter is supplied via a capacitor to a voltage doubler connection with smoothing, the centre point of which connection being preferably fixed at 6.2 V, that the obtained amplitude difference is smoothed, preferably after further amplification, and is compared in the comparator (9) with the preset threshold level provided by the reference voltage source (10), and that the comparator (9) supplies a trigger signal to the interrupter circuit (8) for enabling the welding current when said difference is below/above a preset predetermined differential signal.

6. Circuit as claimed in any one of the claims 1 to 5, characterized in that the comparator (9) energizes an LED indicator and a relay.

7. Circuit as claimed in any one of the claims 1 to 5, characterized in that the comparator (9) energizes an LED indicator, an optical coupler or a transistor (open collector).

8. Use of the circuit as claimed in one or several of the claims 1 to 7 in an industrial welding robot for welding the straps of lead-acid storage batteries, preferably between the cells, in which the d.c. power supply already provided on the head of the welding robot is used as power supply for said circuit.

EP 0 191 393 B1

0191393

Fig. 1

~50 Hz

HF Generator

Vergleicher

Bezugs-spannung

13    2    16
14   6    4  11    1
       5  12    3
15
8    7
9
10

Fig. 2